# EUROPEAN PATENT APPLICATION

(11) **EP 4 631 339 A1**
(43) Date of publication of application: **15.10.2025**
(21) Application number: 25162731.1
(22) Date of filing: 10.03.2025
(51) Int. Cl.: A01D 41/12, A01D 41/127, A01F 12/40

(54) **CROP MATERIAL MONITORING**

(30) Priority: 12.04.2024 GB 202405259
(71) Applicant: AGCO International GmbH, 8212 Neuhausen am Rheinfall (CH)
(72) Inventor: LAURSEN, Morten Stigaard, 8930 Randers (DK); CHRISTIANSEN, Martin Peter, 8930 Randers (DK)
(74) Representative: AGCO Intellectual Property Department

(57) **Abstract**

Methods and systems are provided for determining one or more properties of crop material in a working environment. Sensor data is received from an event based sensor mounted or otherwise associated with the agricultural machine, with the sensor data being indicative of a measure of material present within a material flow associated with one or more working components of an agricultural machine. The sensor data is analysed to determine a crop material parameter for the material flow and operation of one or more operable components of or otherwise associated with the agricultural machine can be controlled in dependence on the determined crop material parameter. The event based sensor is provided with an optical filter associated therewith for filtering light incident on one or more sensing elements thereof.

## Description

### CROSS-REFERENCE TO RELATED APPLICATIONS

Not applicable.

### FIELD

Embodiments of the present disclosure relate generally to systems and methods for monitoring operation of an agricultural harvesting machine, such as a combine harvester.

### BACKGROUND

Agricultural harvesting machines such as combine harvesters, or "combines," work to cut crop material from a field before separating the grain from the material other than grain (MOG) (referred to interchangeably as "residue") on board. Generally, the grain is transferred to a grain bin of the combine (where it may be temporarily stored) and the MOG is deposited back onto the field. A second operation may be performed to gather the deposited MOG, or the MOG may be used as a fertilizer for the soil in the field.

Where the MOG includes straw specifically, e.g. when harvesting grain (wheat, barley, etc.), the straw is usually discharged onto the field at the rear end of the combine, either in the form of a swath to be later taken up by a baler for further processing, or in chopped form over the width of the cutting path. The straw can be damaged during the threshing and separating process, and the extent of this damage largely depends on operational conditions of the combine, in addition to the properties of the crop itself. It is therefore important to consider the operational conditions of the combine when harvesting and its effect on the MOG, and specifically the straw quality.

It is also beneficial to understand characteristics or properties of crop material being harvested by the machine. For example, the presence of weeds or other material within the material, or indeed problems with the crop material itself, e.g. disease, drought, etc. can be inferred or measured through analysis of the material being collected by the machine, e.g. in a crop flow associated with a header coupled to the combine, or indeed monitoring material fed into the machine at the feederhouse. Such properties may be utilised for real time automation or recommendations for operational settings adjustments, or to map or otherwise log crop characteristic(s) (e.g. quality) across a working environment.

One or more characteristics of that material, may be monitored in real time, e.g. utilising a camera or other sensor mounted on the agricultural machine during a given process, e.g. the spreading of crop material by a spreader tool of a combine. Alternatively, the characteristic(s) of the material may be monitored later, either in situ on the field, e.g. as a baler or other machinery is moved through the field or any other machine or vehicle, including aerial scouting vehicles, etc. Whilst it is known to utilise some forms of sensing equipment on such machinery for this purpose, to date many of these known systems suffer from drawbacks in terms of resolution, reliability, amongst other factors.

It is therefore an aim of an embodiment or embodiments of the present disclosure to provide systems and methods for improved monitoring of properties of crop or other material, e.g. straw deposited by a spreader tool of a harvesting machine and/or crop material having interacting with one or more further operational components of a harvesting or related machine.

### BRIEF SUMMARY

An aspect of the invention provides a system for determining one or more properties of crop material in a working environment, the system comprising: an event based sensor; and one or more controllers, configured to: receive sensor data from the event based sensor indicative of a measure of material present within a material flow associated with one or more working components of an agricultural machine; analyse the sensor data to determine a crop material parameter for the material flow; and output one or more control signals for controlling operation of one or more operable components of or otherwise associated with the agricultural machine in dependence on the determined crop material parameter; wherein the system comprises an optical filter associated with the event based sensor for filtering light incident on one or more sensing elements thereof.

Advantageously, the present disclosure utilises an event based sensor for monitoring operation of the agricultural machine, and in particular for determining a crop material parameter for a material flow associated with the machine, e.g. in a material flow from a spreader tool of a combine harvester, or a material flow associated with a header or a harvesting machine, or a material flow at the intake of a baler, for example. The functionality of an event based sensor is particularly suited to such a use case as the data obtained therefrom can be used to accurately identify crop components as they move through a sensing region of the event based sensor. One or more parameters of the crop material can then be determined from the sensor data, and used to infer a measure of, for example, a quality of individual crop material components, a distribution of material associated with the crop flow, or other operating parameters. This may be used to infer an effectiveness or efficiency of an operation of operable components of the agricultural machine and their effect on the crop material quality, for instance, or determine a recommendation or automation of machine components to account for a determined or inferred crop quality, for example. The use of an optical filter may advantageously filter light incident on the sensing elements, e.g. to remove or at least reduce triggers of said sensing elements in response to movement of non-crop material or other background components present an/or moving through in the sensing region of the event based sensor.

When used herein and throughout the term "event based sensor" is intended to include a sensor having multiple individual sensing elements or pixels which are individually triggerable in dependence on one or more variations in the signal output associated with those elements. The one or more variations result from a change in the light incident on said sensing elements, resulting in a change in amplitude in the output signal of those sensing elements. By setting relevant thresholds for said variations, "events" can be triggered in dependence on a given change in incident light on said sensing elements. Such a change may indicate movement in the observed environment, for example. Such sensor types may also be referred to as a neuromorphic camera, a silicon retina or dynamic vision sensor.

When used herein and throughout the term "spreader tool" is intended to cover multiple different spreader tool types, including rotor based spreaders for distributing residue material over a desired distance, but also tools (e.g. tailboards) for distributing straw or other crop material in a swath or the like behind an agricultural machine.

The optical filter may comprise a spectral filter. The optical filter may comprise a band pass filter. The band pass filter may be configured to attenuate incident light at frequencies outside of a selected frequency range. The selected frequency range may correspond to the optical response of material components of interest, e.g. for straw or other crop material, or indeed non-crop material such as stones, weeds etc. to be monitored.

The optical filter may be configured to attenuate frequencies corresponding to live crop or plant material. This may advantageously attenuate or dampen the contribution of live plant material, such as weeds, cover crop etc. This may be particularly advantageous for monitoring residue or swath material, for example. The optical filter may be configured to attenuate frequencies corresponding to lower contrast regions, e.g. soil or like material which may have a similar or lower contrast when compared with the optical response of crop material of interest.

The optical filter may be configured to allow frequencies at or about the "red-well" in the frequency spectrum. This may correspond to a wavelength range between approximately 550nm to 800nm, or between 575nm to 750nm, or between 600-720nm, or between 640-680nm, for example.

The one or more controllers may be configured to identify one or more crop material components within the material flow. The one or more controllers may be configured to determine the one or more crop parameters in dependence on the identified crop material component(s).

The one or more controllers may be configured to apply a clustering process to the sensor data. The clustering process may be applied to the sensor data to identify and associate triggers at multiple sensing elements of the event based sensor. The one or more controllers may be configured to identify one or more material components in dependence on the associated sensing element triggers. This may, for example, include associating sensing element triggers which occur substantially simultaneously, and/or for sensing elements which trigger which are proximal to one another. For instance, the clustering process may comprise a timewise and/or location based clustering process to identify and associate the sensing elements triggered by a common material component.

The one or more controllers may be configured to determine a measure of a length associated with an identified material component. This may, for instance, comprise a count of the number of adjacent and associated sensing elements for a given material component. This may comprise a calculated distance, within the sensor data, between two or more associated sensing elements. The one or more controllers may be configured to compare the determined length with a threshold length. The threshold length may comprise a predetermined threshold length, which may be programmable, for example, to distinguish between different material component types in the monitored material flow. The one or more controllers may be configured to categorize the identified material component as a crop material component in dependence on the comparison of the determined length measure with the threshold length. In embodiments, the one or more controllers may be configured to categorize the identified material component as a straw material component in dependence on the determined length measure exceeding a predetermined straw threshold length.

The crop material parameter may comprise a measure of the length of the identified crop material component(s). The length of the identified crop material component(s) may advantageously provide an indication of an operational condition or function of, e.g. a chopper tool, of the harvesting machine. The one or more controllers are configured to utilise a spatial relationship between the event based sensor and a spreading area of the spreader tool to obtain a measure of length for the crop material component which comprises an absolute measure of its length. In other embodiments, the system comprises a distance sensor and the one or more controllers may be configured to utilise distance data from the distance sensor and a length determined from the sensor data from the event based sensor to determine an absolute measure of the length of the crop material component. The distance sensor may comprise a transceiver type sensor, e.g. a LIDAR sensor, or a stereo based vision system configured for providing distance data for objects within the sensing region of the event based sensor.

The crop material parameter may comprise a measure of a relative length associated with the identified crop material component(s). The relative length may comprise a length measure comparable with an expected or average length measure determined across multiple identified crop material components. In this way, a uniformity of the crop material components can be quantified, again being indicative of an operating condition or function of the crop processing components, and specifically the chopper tool, of the agricultural machine.

The crop material parameter may comprise a measure of a shape or structure of the identified crop material component(s). The measure of a shape or structure of the component(s) may include quantifying a straightness of the identified crop material component(s). This can include a count of a number of bends or folds in the identified crop material component(s).

The crop material parameter may comprise a measure of a speed associated with the identified crop material component(s).

The one or more controllers may be configured to compare the determined crop material parameter with an expected crop material parameter. The expected crop material parameter may be dependent on one or more controllable operating conditions of a crop processing component of the agricultural harvesting machine. For instance, an expected speed of the crop material components may be dependent on an operating speed of crop processing apparatus of the harvesting machine. An expected length may be dependent on the operating status of a chopper tool of the agricultural machine. The one or more controllers may be configured to generate and output the control signal for controlling the operable component(s) in dependence on the comparison.

The one or more controllers may be configured to control application of a signal filter to the output signals from individual sensing elements of the event based sensor, e.g. to remove triggers thereof due to background motion. For example, this may be due to the relative movement of the ground causing changes in the light incident on the sensing elements as the machine performs a task, or due to structural vibration and/or component motion during said tasks. Advantageously, applying one or more signal filters to the analogue output signal from the sensing elements may control the number of individual triggers to be processed by the event based sensor and/or one or more processing units associated therewith.

Additionally or alternatively, the one or more controllers may be configured to apply a data filter to the sensor data. Where the processing capabilities of the controllers is high enough it may be possible to receive all triggers and apply said data filter(s) digitally to remove or discard unwanted triggers.

The signal or data filter may comprise a threshold for a signal parameter associated with the sensing elements, which may include amplitude or rate of change of amplitude of the output signal. The threshold may be definable and/or be dependent on the agricultural task (to be) performed by the agricultural machine.

The signal or data filter may be dependent on a ground speed of the agricultural machine and/or an operational speed of one or more components of or associated with the machine.

The signal or data filter may comprise a mask applied to a sensing region of the sensor, e.g. to exclude regions of the sensing region which do not correspond to the monitored component(s). This may include, for example, the spreader tool and/or a material flow associated therewith.

The one or more operable components of or otherwise associated with the agricultural machine may include a user interface. The one or more controllers may be configured to control output of an indicator indicative of the determined crop material parameter(s) via the user interface.

The user interface may comprise a display screen, which may be provided as part of a user terminal of the machine, e.g. in an operator cab of the machine. Additionally or alternatively, the user interface may be provided by a portable user device, e.g. one carried by a user/operator during operation of the machine. The portable user device may comprise a smartphone, tablet computer, laptop or the like.

The one or more operable components may comprise a propulsion system for the machine. In such embodiments, the one or more controllers may be configured to utilise the propulsion system for controlling a forward speed of the agricultural machine, e.g. in dependence on the determined crop material parameter(s).

The one or more controllers may be configured to control a forward speed of the agricultural machine in dependence on the determined crop material parameter(s). Advantageously, the forward speed of the machine may be utilised to control the feed speed of material into / through the agricultural machine, in turn controlling a load on the crop processing components thereof.

The one or more operable components may comprise an implement control system for one or more implement or other operable components of the machine. The one or more controllers may be configured to utilise the implement control system for controlling one or more operable settings of an associated implement in dependence on the determined crop material parameter(s).

For example, in embodiments, the machine comprises a harvesting machine, and the one or more component of the agricultural machine may comprise a header for the machine. The one or more controllers may be configured for controlling an operational speed of elements of the header, a lift mechanism for the header for controlling an operational position or height of the header, and/or an operational state of the header in dependence on the crop material parameter(s).

In embodiments the component(s) of the agricultural harvesting machine may comprise a crop processing apparatus of the machine. The one or more controllers may be configured to adjust an operational speed of components of the crop processing apparatus to control the speed at which crop material is processed and moved through the agricultural harvesting machine in dependence on the crop material parameter(s).

The crop processing apparatus may include a chopper tool. The one or more controllers may be configured to control operation of the chopper tool in dependence on the crop material parameter(s), e.g. to adjust a cutting length of the crop material passing therethrough.

The event based sensor may be mounted or be mountable on the machine. For example, in some embodiments the sensor may be mounted or be mountable on the rear of the machine, or on an unloading auger of the machine. Such an arrangement may be particularly beneficial when monitoring a spreader tool of the machine and/or a crop material flow associated therewith. In other embodiments, the sensor may be mounted or be mountable on the machine with a field of view which encompasses a region at or in front of the machine. This may be particularly beneficial when monitoring the intake of the machine and/or a header arrangement operably coupled to the machine, and/or a crop material flow associated therewith.

The one or more controllers may collectively comprise an input (e.g. an electronic input) for receiving one or more input signals. The one or more input signals may comprise sensor data from the event based sensor. The one or more controllers may collectively comprise one or more processors (e.g. electronic processors) operable to execute computer readable instructions for controlling operational of the control system, for example, to determine the crop material parameter(s). The one or more processors may be operable to generate one or more control signals for controlling operation of the one or more operable components. The one or more controllers may collectively comprise an output (e.g. an electronic output) for outputting the one or more control signals.

A further aspect provides an agricultural machine comprising the system as described hereinabove. The agricultural machine may comprise a harvesting machine, such as a combine harvester. The agricultural machine may comprise a baler. The agricultural machine may comprise a tractor having one or more operable implements coupled to the tractor (e.g. towed by the tractor).

A further aspect provides a method determining one or more properties of crop material in a working environment, comprising: receiving sensor data from an event based sensor mounted or otherwise associated with an agricultural machine operating within the working environment, the sensor data being indicative of a measure of material present within a material flow associated with one or more working components of an agricultural machine; analysing the sensor data to determine a crop material parameter for the material flow; and controlling operation of one or more operable components of or otherwise associated with the agricultural machine in dependence on the determined crop material parameter; wherein the event based sensor is provided with an optical filter associated therewith for filtering light incident on one or more sensing elements thereof.

The method may comprise performing any one or more of the functionalities of the one or more controllers of the system described hereinabove.

A further aspect of the invention provides computer software comprising computer readable instructions which, when executed by one or more electronic processors, causes performance of a method in accordance with any aspect described herein.

A yet further aspect of the invention provides a computer readable medium having the computer software of the preceding aspect of the invention stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a schematic side cross-sectional view of an agricultural harvester embodying aspects of the present disclosure;
FIG. 2 is a schematic view of an embodiment of a system of the present disclosure;
FIG. 3 illustrates sensor data obtained by a sensing arrangement forming part of aspects of the present disclosure;
FIG. 4 is an image of residue material obtained utilising a camera illustrating the operational use of embodiments discussed herein;
FIG. 5 illustrates experimental data illustrating advantages associated with the present disclosure; and
FIG. 6 shows two images illustrating the effect of utilising the optical filter forming part of aspects of the present disclosure.

### DETAILED DESCRIPTION

The present disclosure relates to systems and methods for determining one or more properties of crop material in a working environment. An event based sensor 30 is utilised to obtained sensor data which is indicative of a measure of material present within a material flow associated with one or more working components of an agricultural machine, which in the illustrated embodiment includes a harvester 10. Controller(s) 102 is configured to analyse the sensor data to determine a crop material parameter for the material flow. As discussed herein, this may include a parameter indicative of material quality, from which an operational efficiency or effectiveness of a crop processing apparatus or other component(s) of the harvester 10 may be inferred. In other embodiments, the parameter may be indicative of a material quality or property from which operational settings for a following agricultural operation may be determined. Operation of one or more operable components of or otherwise associated with the harvester 10 (e.g. a user interface 32 or components of the spreader tool 22, crop processing apparatus 16 or the like, for instance) can be controlled based on determined parameters, e.g. in the manner discussed herein. As discussed herein, the event based sensor 30 is provided with an optical filter associated therewith for filtering light incident on one or more sensing elements thereof.

### Harvester

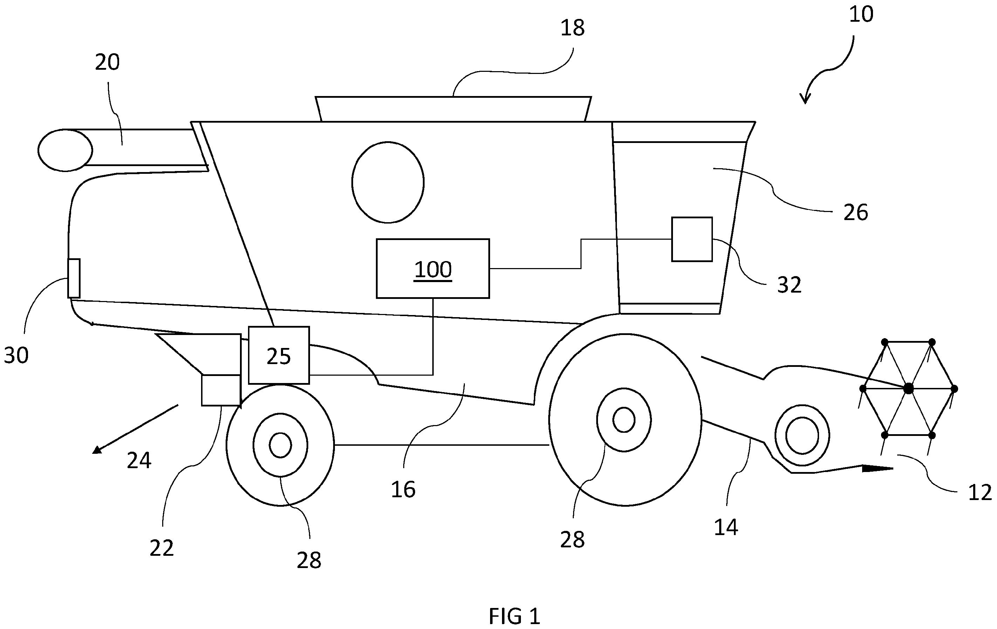

With reference to FIG. 1, an agricultural machine in the form of a harvester 10 is shown which embodies aspects of the present disclosure.

The harvester 10 is coupled to a header 12 which is operable, in use, to cut and gather a strip of crop material as the harvester 10 is driven across a field / area to be harvested during a harvesting operation. A conveyor section 14 conveys the cut crop material from the header 12 into a crop processing apparatus 16 operable to separate grain and non-grain (i.e. material other than grain (MOG) or residue material (used interchangeably herein)) as will be appreciated. It is noted here that apparatus for separating grain and non-grain material are well-known in the art and the present invention is not limited in this sense. The skilled person will appreciate that numerous different configurations for the crop processing apparatus may be used as appropriate. Clean grain separated from the cut crop material is collected in a grain bin 18, which may be periodically emptied, e.g. into a collection vehicle, storage container, etc. utilising unloading auger 20. The remaining non-grain material (MOG) / residue material is separately moved to a spreader tool 22 which is operable in use to eject the non-grain material or MOG from the rear of the harvester 10 and onto the ground. In Figure 1, this is represented by arrow 24 which illustrates the MOG being ejected rearwards from the harvester 10. The harvester 10 also includes a chopper tool 25 positioned between the crop processing apparatus 16 and the spreader tool 22 and operable, in use, to cut the residue material before it is spread by the spreader tool 22.

The harvester 10 also typically includes, amongst other features, an operator cab 26, wheels 28, engine (not shown) and a user interface in the form of a display terminal 32 provided within the operator cab 26.

### Event Based Sensor

As will be discussed in detail herein, the harvester 10 additionally includes a sensor in the form of an event based sensor 30. In the illustrated embodiment, the sensor 30 is mounted to a rear of the harvester 10 and has a field of view which encompasses an operating region of the spreader tool 22, specifically here the region of the working environment directly behind the harvester 10 into which material is spread by the spreader tool 22. Here, the event based sensor 30 is used, by a control system 101 of the harvester 10, to monitor a material flow associated with the spreader tool 22 in the manner discussed herein.

Event based sensor 30 has multiple individual sensing elements (pixels) which are individually triggerable in dependence on one or more variations in the signal output associated with those elements. The one or more variations result from a change in the light incident on said sensing elements, resulting in a change in amplitude in the output signal of those sensing elements. By setting relevant thresholds for said variations, "events" can be triggered in dependence on a given change in incident light on said sensing elements. The variations can be used as an indication of movement in the observed environment, for example, by monitoring successive triggers of adjacent sensing elements, and inferring movement in the observed scene based thereon. In further arrangements the overall sensor output for a given time period may be used - e.g. forming of a histogram or heat map of triggers - to obtain a measure of an overview of a given process - e.g. shape/size of flowpath or material distribution, etc.

The event based sensor 30 is provided with an optical filter. In the illustrated embodiment, the optical filter comprises a spectral filter in the form of a band pass filter. The band pass filter is configured to attenuate incident light at frequencies outside of a selected frequency range. Here, the selected frequency range corresponds to the optical response of crop material components of interest, which in the illustrated embodiment corresponds to straw or residue material spread by the spreader tool 22. Through appropriate selection of the band pass filter properties, it is also possible to attenuate frequencies corresponding to live crop or plant material. This may advantageously attenuate or dampen the contribution of live plant material, such as weeds, cover crop etc., providing greater contrast in the resultant sensor data from the event based sensor 30 enabling better identification and monitoring of residue or swath material spread by the spreader tool 22. In this embodiment, the optical filter is configured to allow frequencies at or about the "red-well" in the frequency spectrum, which corresponds to a wavelength of between approximately 640-680nm.

Operation of the event based sensor 30 may additionally be controlled based on the given scenario. For instance a signal or data filter may be applied to the sensing elements to control at what magnitude of change / variation said sensing elements are triggered. This may be utilised to remove background events from the data. For instance, in the presently illustrated embodiment using the sensor 30 on the harvester 10 during a harvesting operation, motion of the ground with respect to the harvester 10 may otherwise trigger the sensing elements. Accordingly, a signal or data filter can be applied based on the ground speed of the harvester 10 to reduce or eliminate false triggers thereof. In alternative arrangements, the operational speed of the components of the harvester 10, e.g. a rotational speed of elements of the spreader tool 22, may be used to determine the signal or data filter to be applied to the sensor data to remove cyclical or repetitive motion from the scene - e.g. in order to identify anomalies or changes in that motion indicative of an operational issue.

In an embodiment, a clustering process may be applied to the sensor data. This clustering may be a timewise and/or location based clustering to identify triggers at multiple sensing elements which correlate to the same physical observation. For instance, data may be clustered timewise to identify (and optionally track movement of) individual material components (e.g. pieces of straw or other crop material) in the sensor data. In further examples, clustering may be applied in dependence on a determined flow velocity of material (e.g. as determined through application of an optical flow measurement of the sensor data) which may be used to indicate regions within the field of view of the sensor where material may be travelling at different speeds to other regions or compared with an expected flow parameter. Regions within the sensing area where no triggers are seen (in areas where they would be expected) may be indicative of a plugging of material or other fault preventing material flow in that region.

### System

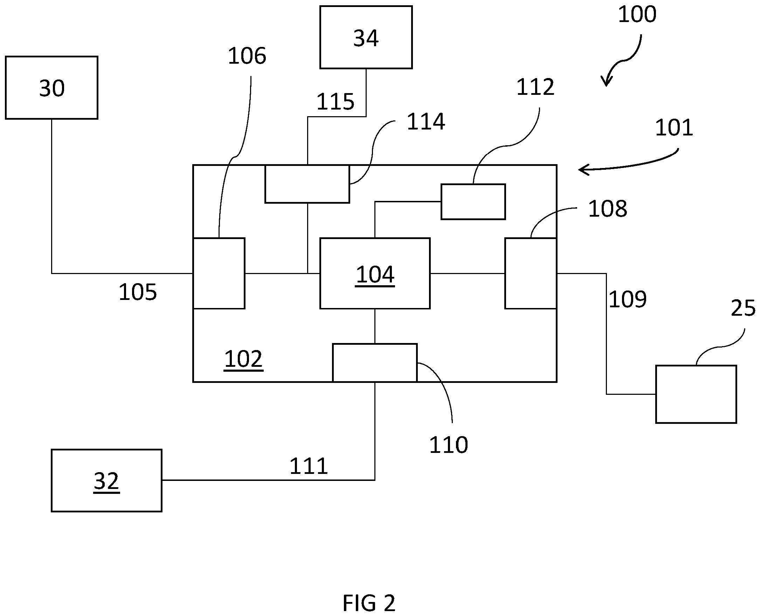

FIG. 2 illustrates system 101 further. As shown, the system incorporates a control system 100 here having a single controller 102. The controller 102 includes an electronic processor 104, an electronic input 106 and electronic outputs 108, 110, 114. The processor 104 is operable to access a memory 112 of the controller 102 and execute instructions stored therein to perform the steps and functionality of the present invention, for example to output control signals 109, 111, 115 via the outputs 108, 110, 114 for controlling operation of operable components of the machine, including the chopper tool 25, for updating data stored on a remote server 34, e.g. a mapped representation of the crop parameter(s), or for controlling the display terminal 32, for example to provide an graphical indication to an operator of the harvester 10 illustrative of the determined crop parameter(s).

The processor 104 is operable to receive sensor data via input 106 which, in the illustrated embodiment, takes the form of input signals 105 received from the event based sensor 30. As described in detail herein, the event based sensor 30 has a sensing region rearward of the harvester 10, with the sensor data received from the sensor 30 being indicative of a measure of crop material present within the sensing region. Using this information, the processor 104 is operable to analyse the sensor data to determine one or more crop parameters associated with the material flow. This may include the identification of one or more crop material components within the material flow from the spreader tool 22, for example. This may include application of a filter to the sensor data, and/or performance of a clustering process to extract data relating to individual crop material pieces from background data. As discussed herein, a signal or data filter may be applied to the sensing elements to control at what magnitude of change / variation said sensing elements are triggered. This may be utilised to remove background events from the data. For instance, in the presently illustrated embodiment using the sensor 30 on the harvester 10 during a harvesting operation, motion of the ground with respect to the harvester 10 may otherwise trigger the sensing elements. Accordingly, a signal or data filter can be applied based on the ground speed of the harvester 10 to reduce or eliminate false triggers thereof. In alternative arrangements, the operational speed of the components of the harvester 10, e.g. a rotational speed of elements of the spreader tool 22, may be used to determine the signal or data filter to be applied to the sensor data set a trigger threshold which is related to an expected flow velocity for the crop material components. The signal or data filter may be applied in addition to the spectral or optical filter discussed herein.

A clustering process can be applied to the sensor data to identify sensing element triggers which relate to common crop material components. This clustering may be a timewise and/or location based clustering. For instance, data may be clustered timewise to identify (and preferably track movement of) individual material components (e.g. pieces of straw or other crop material) in the sensor data. Clustering may be applied in dependence on a determined flow velocity of material (e.g. as determined through application of an optical flow measurement of the sensor data) which may be used to indicate regions within the field of view of the sensor indicative of crop material being spread by the harvester 10.

The processor 104 may then determine a crop material parameter for each of the identified material components. For example, the processor 104 is analyse the sensor data received from the event based sensor 30 to determine crop material parameters which may include a measure of the length for one or multiple crop material components, e.g. looking for a uniformity of length of crop material components. The crop material parameters may include a measure of a shape and/or structure of the crop material components, optionally including a measure of the "straightness" of the crop material component, and/or a speed or trajectory of the crop material components as determined through an optical flow analysis of the sensor data for identified crop material components.

Advantageously, the sensor data can be used to determine a quality parameter for the crop material indicative of the operational effectiveness or efficiency of crop processing components of the harvester 10. For instance, a substantially consistent length of cut of the crop material components may be indicative of an acceptable operation of a chopper tool 25 of the harvester 10, that being providing chopped crop material with a consistent length for, e.g. a later baling process. Where the length of the identified crop material varies significantly, this could be indicative of a fault with the chopper tool, for example. A shape or structure of the crop material component may indicate a level of processing of the crop material by the harvester 10. A material piece having multiple bends, kinks etc. may indicate an over working of the crop material component by the machine which could be detrimental depending on what that crop material is to be used for. The speed, flow characteristics, etc. advantageously provide information relating to the location in the working environment where the material is spread. This in turn can be used to generate a measure of parameters relating to, e.g. a formed swath. In advantageous embodiments where the crop material is discharged by the spreader tool 22 to form a swath, the crop material parameter may be utilised to calculate a swath quality parameter which can be used, for example, to map the quality of the swath across an environment which may feed into subsequent operational planning.

Output 108 is operably coupled to chopper tool 25, or more specifically a local control unit for chopper tool 25. The control system 101 is operable to control operation of the chopper tool 25 in dependence on the determined crop material parameter(s), determined in the manner discussed herein. For instance, where the crop material parameter relates to a length of cut, or more specifically a measure of the uniformity of, or average length of cut for multiple crop material components, the control system may control, through generation and output of control signals 109, the chopper tool 25 to, for example, adjust an operational speed or frequency thereof to adjust a target cutting length for the crop material.

Output 110 is operably coupled to the display terminal 32 of the harvester 10. Here, the control system 101 is operable to control operation of the display terminal 32, e.g. through output of control signals 111 in order to display operational data to an operator of the harvester 10 relating to the operation of the control system 101. Specifically, the control system 101 may be operable to control the display terminal 32 to display to the operator a graphical representation of the crop material parameter(s) as determined by processor 104, sensor data from the event based sensor 30, image data obtained from a camera on the harvester 10, or other useful information. In some variants, the display terminal 32 may also be operable to receive a user input from the operator, and in such instances the output 110 may act as an input for receiving that user input at the processor 104. The user input may relate to a requested or target parameter, for example a desired length of cut for the crop material components, made by the operator of the harvester 10.

Output 114 is operably coupled to a database hosted on remote or cloud server 34. Here, the output 114 forms a communication module for communicating data offboard from the harvester 10. Alternatively, output 114 may utilise a communication module of the harvester 10 and may be operably connected to server 34 indirectly thereby. The control system 101 may utilise server 34 to store data relating to the determined crop material parameter(s), e.g. for later retrieval for operational planning of subsequent operations, e.g. a baling operation. In embodiments the control system 101 may be operably connected to a positioning module of the harvester 10, and the location of the harvester 10 within the environment may be linked to determined crop material parameters to generate a mapped environment containing data indicative of, e.g. a crop material quality across the environment.

In further examples, the control system 101 may be operable to control further operational components of the harvester. For instance, the control system 101 may be operably coupled to the spreader tool 22 for controlling operation thereof, e.g. where it is determined from the crop material parameters that an adjustment in the spread or distribution pattern provided by the tool 22 needs adjusting. The control system 101 may be operably coupled to crop processing apparatus 16 of the harvester 10, for adjusting a degree of processing applied to the crop material as it passes through the harvester 10. This may be performed, in dependence on crop material parameters relating to the shape or structure of the identified crop material components.

### Sensor Data

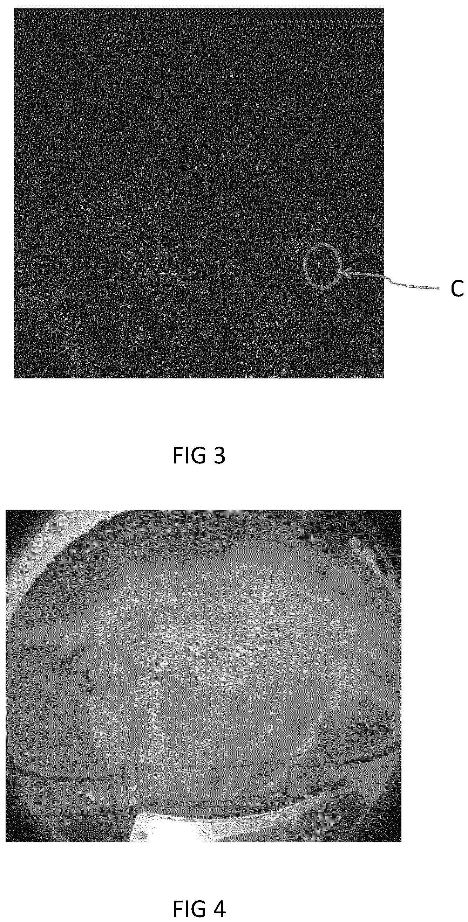

FIG. 3 illustrates a representation of sensor data obtained during operation of the harvester 10. Here, "triggered" sensing elements of the event based sensor 30 are shown indicative of movement in the region of the environment corresponding to the relevant pixel in the displayed sensor data. FIG. 4 illustrates a similar scene utilising a camera based system with residue material shown being spread behind the rear of a harvester 10. This is inherently noisy and near impossible to identify individual crop components from the image data alone.

As shown, through suitable processing of the sensor data via filters and the like, only those triggers in response to movement of crop material within the observed region is present in the generated representation. This removes background noise / triggers from the data enabling further features to be extracted from the data, including the crop material parameter(s) discussed herein.

In FIG. 3, a crop material component, C is highlighted. In the sensor data, this is represented as a substantially straight line of adjacent triggered sensing elements. From this, a crop material parameter in the form of a measure of the length of the identified material component can be computed. This can be a count of the number of adjacent sensing elements triggered determined to correspond to the crop material component. In an extension of this, a further sensing capability may be introduced with suitable data fusion thereof to obtain a measure of the distance of the crop material component from the event based sensor 30, this distance being used to compute an absolute length of the crop material component. The additional sensing capability may include a transceiver based system, such as LIDAR, for instance. As discussed, a relative length measure may be calculated, relating to the length of the identified crop material components across the sensor data, which may provide information relating to the uniformity of cut of the material by the chopper tool 25.

In a further variant, a crop material parameter in the form of a measure of the shape or structure of the crop material component may be computed. This may, for example, quantify a number of bends or kinks in a given material component. As discussed herein, this may be indicative of a level of crop processing provided by the harvester 10, and suitable control actions may be taken dependent thereon.

In a further variant, an optical flow analysis may be performed on the sensor data, from which it may be possible to extract flow parameters for any given identified crop material component, including a speed, direction or even mass of the material component (based on speed and length of the relevant component. The flow parameters may provide information relating to the trajectory of a crop material component, including thereby information relating to a resting location for any given material component in the working environment. This may be particularly beneficial to determine whether material discharged by the spreader tool 22 is forming a distribution, e.g. full spread pattern or swath operation, with desired characteristics, e.g. width and/or profile. Information on the resting location for given material components may also be linked to the mapped dataset stored at server 34.

Turning back to FIG. 4, it can be seen how the residue material can in some instances be difficult to distinguish from the background data, at least in the RGB image data. Accordingly, the system of the present disclosure employs an optical filter for filtering light incident on one or more sensing elements of the event based sensor 30, ultimately to increase the signal to noise ratio in the resultant sensor data, as discussed herein.

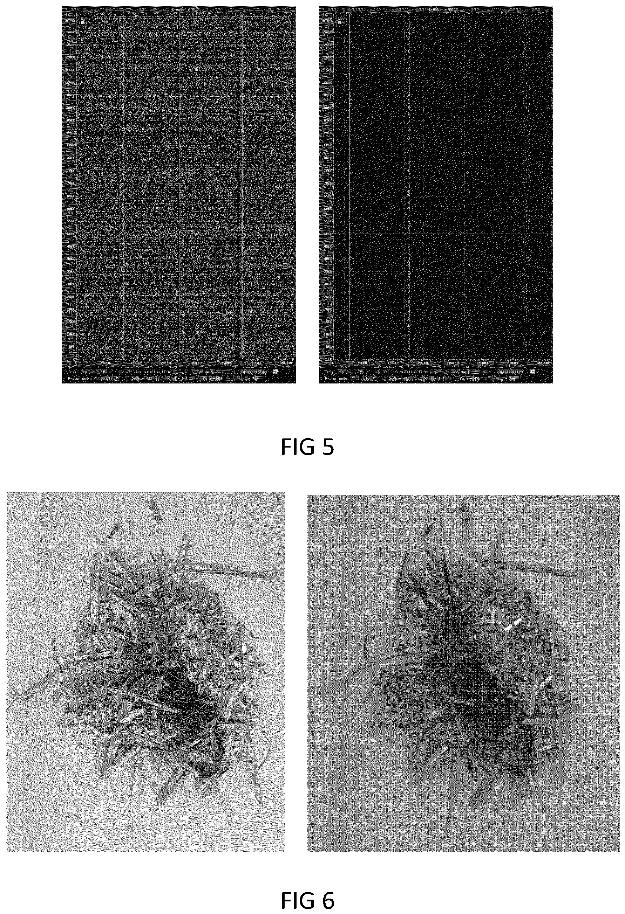

FIG. 5 provides experimental data which illustrates how an improvement in the signal to noise ratio in the event sensor data can be beneficial. Specifically, the left hand image illustrates the sensor output with events triggered at contrast change of around 16%, and the right illustrating the sensor output with events triggered at a contrast change of around 25%. The vertical lines in the image represent the illumination and de-illumination of a light source incident on the event base sensor, and hence represent "real" events in so much as they are triggered by lighting changes. As shown, when triggering at a lower contrast change, the background is considerably higher and masks the "real" event data. Increasing the contrast threshold removes much of this background, but at the same time also reduces the "real" signal. However, it does illustrate that if the background "events" can be removed or masked from the sensing elements of the event based sensor, and the "real" events maintained or at least reduced less, e.g. through targeted filtering of light at wavelengths associated with the background details, e.g. soil, live plant material, etc. then the "real" events may be considerably more prominent in the sensor output. In practice, with the optical filter present, the trigger parameters may be adjusted to a lower contrast change threshold, increasing the signal from "real" events, whilst working in tandem with the optical filtering to reduce the "noise", thereby providing an increased signal to noise ratio and a more useful/interpretable sensor output.

To illustrate this further, FIG. 6 is provided which is a direct comparison of an RGB image of a crop material sample on the left, with the same sample imaged utilising the optical filter of the present disclosure, specifically targeted to attenuate light at wavelengths outside of those corresponding to the material pieces of interest, here straw. As shown, the soil and green matter shown in the RGB image is significantly less prominent once the optical filter is applied, allowing for better analysis of the straw material. When applied to the event based sensor 30, it has been shown to provide a further increased signal to noise ratio - see discussion around FIG. 5 - as those "black" data points in the filtered RGB image are reduced in number in the event sensor data - i.e. they have a lower probability of causing triggering of the sensing elements thereof and hence provide a lower contribution to the sensor output when compared with the non-filtered data. Accordingly, the background noise contribution in the sensor data from the event based sensor can be significantly reduced, and an improvement in the analysis and quantification of the crop parameter(s) can be realised.

### Further Embodiments

Whilst described herein in relation to an agricultural harvesting machine 10, and specifically monitoring the quality of straw or residue material distributed by a spreader tool 22 of the harvester 10, it will be appreciated that the system of the present disclosure may be utilised in a number of different agricultural scenarios.

For example, the event based sensor 30 may be mounted to or otherwise associated with an operator cab of the harvester, or on a header arrangement operably coupled to the harvester 10 for monitoring a crop material flow through the header arrangement. This may be utilised, for example, to determine crop material parameters or properties which may be accounted for by adjustments in one or more operational settings of the harvester 10, such as the crop processing apparatus 16 or components thereof. This may include analysis of a crop throughput, for example, and hence an upcoming or anticipated load on operational components of the harvester 10.

Alternatively, the event based sensor 30 may be mounted to or otherwise coupled with a separate machine operating in the working environment. For example, the sensor 30 may be mounted or otherwise associated with a baling machine, which may be a self-propelled machine or an implement towed by a further agricultural machine, such as a tractor. The sensor may be utilised to monitor a crop flow associated with an intake of a baling machine, for example, for mapping or associating crop quality parameters with a bale formed thereby.

Many different implementations will be appreciated by the skilled person.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A system for determining one or more properties of crop material in a working environment, the system comprising:
an event based sensor; and
one or more controllers, configured to:
receive sensor data from the event based sensor indicative of a measure of material present within a material flow associated with one or more working components of an agricultural machine;
analyse the sensor data to determine a crop material parameter for the material flow; and
output one or more control signals for controlling operation of one or more operable components of or otherwise associated with the agricultural machine in dependence on the determined crop material parameter;
wherein the system comprises an optical filter associated with the event based sensor for filtering light incident on one or more sensing elements thereof.

2. A system of claim 1, wherein the optical filter comprises a spectral filter.

3. A system of claim 1 or claim 2, wherein the optical filter comprises a band pass filter configured to attenuate incident light at frequencies outside of a selected frequency range, the selected frequency range corresponding to an optical response of crop material components of interest.

4. A system of claim 3, wherein the optical filter is configured to attenuate frequencies corresponding to live crop or plant material.

5. A system of any preceding claim, wherein the one or more controllers are configured to: identify one or more crop material components within the material flow; and determine the one or more crop parameters in dependence on the identified crop material component(s).

6. A system of claim 5, wherein the one or more controllers are configured to determine a measure of a length associated with an identified material component; and wherein the crop material parameter(s) comprises a measure of the length of the identified crop material component(s).

7. A system of claim 6, wherein the crop material parameter(s) comprises a measure of a relative length associated with the identified crop material component(s).

8. A system of any of claims 5 to 7, wherein the crop material parameter comprises a measure of a shape or structure of the identified crop material component(s).

9. A system of any of claims 5 to 8, wherein the crop material parameter comprises a measure of a speed associated with the identified crop material component(s).

10. A system of any of any preceding claim, wherein the one or more controllers are configured to: compare the determined crop material parameter with an expected crop material parameter; and generate and output the control signal for controlling the operable component(s) in dependence on the comparison.

11. A system of any preceding claim, wherein the one or more operable components of or otherwise associated with the agricultural machine include one or more of:
a user interface; wherein the one or more controllers are configured to control output of an indicator indicative of the determined crop material parameter(s) via the user interface;
a propulsion system for the machine; wherein the one or more controllers are configured to utilise the propulsion system for controlling a forward speed of the agricultural machine in dependence on the determined crop material parameter(s); and
an implement control system; wherein the one or more controllers are configured to utilise the implement control system for controlling one or more operable settings of an associated implement in dependence on the determined crop material parameter(s).

12. An agricultural machine comprising the system of any preceding claim.

13. A method determining one or more properties of crop material in a working environment, comprising:
receiving sensor data from an event based sensor mounted or otherwise associated with an agricultural machine operating within the working environment, the sensor data being indicative of a measure of material present within a material flow associated with one or more working components of the agricultural machine;
analysing the sensor data to determine a crop material parameter for the material flow; and
controlling operation of one or more operable components of or otherwise associated with the agricultural machine in dependence on the determined crop material parameter;
wherein the event based sensor is provided with an optical filter associated therewith for filtering light incident on one or more sensing elements thereof.
